# EUROPÄISCHE PATENTSCHRIFT

(11) **EP 2 855 982 B1**
(45) Veröffentlichungstag und Bekanntmachung des Hinweises auf die Patenterteilung: **02.03.2016**
(21) Anmeldenummer: 13725668.1
(22) Anmeldetag: 29.05.2013
(51) Int. Cl.: F16J 15/00, F16J 15/40, F16J 15/44

(54) **DICHTANORDNUNG ZUR ABDICHTUNG EINER HIN- UND HERGEHENDEN KOLBENSTANGE EINES KOLBENKOMPRESSORS**
SEALING ASSEMBLY FOR SEALING A RECIPROCATING PISTON ROD OF A RECIPROCATING COMPRESSOR
ENSEMBLE D'ÉTANCHÉITÉ PERMETTANT DE RENDRE ÉTANCHE UNE TIGE DE PISTON À MOUVEMENT ALTERNATIF D'UN COMPRESSEUR À PISTON

(30) Priorität: 04.06.2012 AT 502182012
(43) Veröffentlichungstag der Anmeldung: 08.04.2015
(73) Patentinhaber: Hoerbiger Kompressortechnik Holding GmbH, 1220 Wien (AT)
(72) Erfinder: HOLD, Christian, A-2102 Bisamberg (AT); LINDNER-SILWESTER, Tino, A-1230 Wien (AT); KERNBICHLER, Christian, A-2431 Enzersdorf an der Fischa (AT); SPIEGL, Bernhard, A-1230 Wien (AT)
(74) Vertreter: Patentanwälte Pinter & Weiss OG
(86) Internationale Anmeldenummer: PCT/EP2013/061004
(87) Internationale Veröffentlichungsnummer: WO 2013/182456

(56) Entgegenhaltungen:
- AT-A4- 507 564
- DE-A1- 2 839 243
- GB-A- 1 448 530

## Beschreibung

Die gegenständliche Erfindung betrifft eine Dichtanordnung zur Abdichtung einer hin- und hergehenden Kolbenstange eines Kolbenkompressors mit einem ersten und zweiten Dichtelement, die in einer Ausnehmung der Dichtanordnung axial beabstandet angeordnet sind, wobei in der Dichtanordnung eine mit der Ausnehmung verbundene Zuleitung für ein unter Druck stehendes Dichtmedium vorgesehen ist und der Druck des Dichtmediums größer als der abzudichtende Druck ist und die Dichtelemente durch den Druck des Dichtmediums jeweils an einem axialen Ende der Ausnehmung und an der Kolbenstange anliegend angeordnet sind, sodass das Dichtmedium durch die Dichtelemente mit dem Druck in der Ausnehmung bekannt, eingeschlossen ist. So eine Dichtanordnung ist aus der AT507564A

In einem Kolbenkompressor ist der Raum mit hohem Druck, z.B. der Arbeitsdruck im Zylinder des Kompressors, gegenüber einem Raum mit niedrigem Druck, z.B. der Atmosphärendruck im Kurbelgehäuse des Kompressors, entlang der Kolbenstange abzudichten. Dazu werden bekannter Weise sogenannte Druckpackungen eingesetzt, die zwischen der hin- und herbewegten Kolbenstange des Kolbenkompressors und einem feststehenden Maschinenteil, in der Regel das Kompressorgehäuse, abdichten. Eine solche Dichtpackung umfasst in der Regel mehrere axial hintereinander angeordnete Packungsringe bzw. Packungsring-Kombinationen. Am häufigsten werden Kombinationen aus einem radial geschnittenen und einem tangential geschnittenen Packungsring verwendet, wie z.B. aus der EP 1 146 264 A2 hervorgehend. Daneben werden auch segmentierte Ringdesigns, bei denen ein Packungsring aus mehreren Ringsegmenten zusammengesetzt wird, eingesetzt, wie z.B. aus der US 4 350 349 A bekannt. Solche Abdichtungen sind jedoch keine zu 100% dichten Systeme, sondern weisen immer eine gewisse Leckagemenge auf, die durch die Abdichtung entweicht. Um das Problem der Leckage zu reduzieren wurde in der WO 2010/079227 A1 bereits vorgeschlagen, als Abdichtung zwei axial beabstandete Dichtelemente zu verwenden, zwischen denen ein Dichtmedium, z.B. Öl, mit hohem Druck eingebracht wird, wodurch die Dichtelemente zur Abdichtung gegen vorgesehene Dichtflächen in der Dichtpackung gepresst werden. Auf diese Weise wird eine Dichtmediumbarriere geschaffen, die die Leckage des Arbeitsmedium des Kompressors, wie z.B. Luft oder Erdgas, entlang der Kolbenstange zumindest reduziert, im Idealfall sogar eliminiert.

Solche Dichtpackungen oder Abdichtungen sind im Normalfall auch gekühlt, z.B. indem Kühlmedium durch die Dichtpackung umgewälzt wird, um die Kolbenstange indirekt über die Kühlung der Dichtpackung zu kühlen. Das verursacht aber natürlich zusätzlichen konstruktiven und betrieblichen Aufwand.

Ähnliche Abdichtungen sind zur Abdichtung der Kolbenstange eines Stirling-Motors her bekannt, z.B. aus der US 4,222,575 A oder der DE 28 39 243 A1. Dabei ist auch eine Leckagerückführung vorgesehen, mit der an sich unerwünschte Leckage von Dichtmedium drucklos in ein Dichtmediumreservoir rückgeführt werden kann.

Aus der WO 2011/062484 A1 ist eine Abdichtung einer Rotorwelle einer Schiffsschraube offenbart, in der zwei Druckkammern vorgesehen sind, durch die ein Dichtmedium umgewälzt wird. Der Druck des Dichtmediums in der Druckkammer ist hier aber kleiner, als der abzudichtende Druck. Die beiden Druckkammern verwenden unterschiedliche Dichtmedien, wobei der Druck in beiden Druckkammern vom Druck eines zugeführten Dichtmediums und einer Drossel bestimmt wird. Pumpen in den Dichtmedienkreisläufen dienen der Rezirkulation des Dichtmediums.

Allerdings weist eine Abdichtung in Form einer Dichtmediumbarriere, neben einer unvermeidbaren Leckage an Dichtmedium, doch auch gewisse Probleme auf. Aufgrund des geringen Dichtmediumvolumens in der Dichtmediumbarriere erreicht das Dichtmedium durch reibungsbedingten Wärmeeintrag (durch die Reibung zwischen schnell hin- und hergehender Kolbenstange und dem Dichtmedium) leicht Temperaturen von bis zu 200°C und darüber. Die Auswahl an möglichen einsetzbaren Dichtmedien ist dadurch von vornherein schon eingeschränkt. Durch die hohen Temperaturen kommt es aber auch zu einer raschen thermischen Alterung des Dichtmediums, wodurch die Dichtfunktion leiden kann. Durch den Temperaturanstieg kommt es aber gleichzeitig auch zu einem Druckanstieg in der Abdichtung, was unerwünschter Weise dazu führen kann, dass verstärkt Dichtmedium aus der Abdichtung austritt. Zusätzlich werden durch den erhöhten Druck natürlich auch die Dichtelemente der Dichtmediumbarriere übermäßig belastet, was letztendlich zum Versagen der Dichtelemente führen kann. Dazu kommt, dass hydraulische Komponenten in der Standardausführung nur bis Temperaturen von typischer Weise 80°C ausgelegt sind. Hydraulische Komponenten, die höhere Temperaturen, insbesondere derart hohe Temperaturen wie hier möglich, beherrschen, sind entsprechend teuer. Zusätzlich bedingen diese hohen Temperaturen auch eine ausreichende Kühlung der Abdichtung. Nicht zuletzt kann sich in der Abdichtung auch Verschmutzung, z.B. aus Abrieb oder prozessbedingter Schmutz, ansammeln, der die Funktion der Abdichtung ebenfalls beeinträchtigen kann.

Es ist daher eine Aufgabe der gegenständlichen Erfindung, die oben genannten Probleme mit Dichtmediumbarrieren als Abdichtung in einem Kolbenkompressor zu beheben.

Diese Aufgabe wird erfindungsgemäß dadurch gelöst, indem eine Ableitung für das Dichtmedium vorgesehen ist, die mit der Ausnehmung verbunden ist und weiters eine Umwälzeinrichtung vorgesehen ist, die das Dichtmedium unter Aufrechterhaltung des Drucks des Dichtmediums in der Ausnehmung über die Zu- und Ableitung durch die Ausnehmung umwälzt. Durch die Umwälzung von Dichtmedium durch die Ausnehmung wird ohne Beeinträchtigung der Dichtfunktion dafür gesorgt, dass die Temperatur des Dichtmediums in vertretbaren Bereichen gehalten wird, womit die damit in Zusammenhang stehenden Probleme, wie Druckanstieg in der Abdichtung, thermische Alterung des Dichtmediums, Kühlung der Dichtanordnung zumindest erheblich vermindert werden. Darüber hinaus wird dadurch auch eine allfällige Verschmutzung aus der Abdichtung abgeführt, womit auch störende Ablagerungen von Schmutz oder Abrieb reduziert werden. Ein weiterer erheblicher Zusatznutzen dieser Umwälzung ist aber darin zu sehen, dass dadurch die Kühlung der Dichtanordnung entfallen kann und aber gleichzeitig auch die Kolbenstange direkt gekühlt wird, was bisher nur durch aufwendige Konstruktionen möglich war.

Der gewünschte Druck des Dichtmediums kann auf einfache Weise eingestellt werden, wenn in der Ableitung eine Druckregeleinheit angeordnet ist.

Um im Stillstand des Kompressors und/oder im Störfall ein Rückströmen von Arbeitsmedium des Kompressors in den Dichtmediumbehälter zu verhindern, kann in der Ableitung ein erstes und/oder ein zweites Absperrventil angeordnet sein, das auch zum Entlüften der Abdichtung dienen kann.

Wenn in der Zuleitung ein vorgespanntes Rückschlagventil angeordnet ist, kann auf einfache Weise verhindert werden, dass im Störfall oder im abgeschalteten Zustand Arbeitsmedium des Kompressors in den Dichtmediumbehälter zurückströmt.

Eine Entlüftungsleitung kann selbsttätig geöffnet oder geschlossen werden, wenn das zweite Absperrventil durch den Druck vor dem vorgespannten Rückschlagventil betätigt ist. Damit kann auch verhindert werden, dass Dichtmedium durch die Entlüftungsleitung verloren geht.

Es kann auch auf einfache Weise eine Temperaturführung des hydraulischen Systems realisiert werden, indem an der Ableitung ein Temperatursensor vorgesehen wird, der mit einer Regelungseinheit zum Regeln der Umwälzeinrichtung verbunden ist. Damit kann die Temperatur des Dichtmediums geregelt bzw. nach oben begrenzt werden.

Der Druck des Dichtmediums kann auch geregelt werden, indem an der Ableitung ein Drucksensor vorgesehen wird, der mit einer Regelungseinheit zum Regeln der Umwälzeinrichtung verbunden ist. Damit können durch entsprechende Sollwertvorgaben auf einfache Weise verschiedene Dichtmediumdrücke eingestellt werden.

Um zwei Betriebsmodi, z.B. Stillstand und Normalbetrieb, einstellen zu können, kann in der Ableitung ein Umschaltventil vorgesehen sein, das ein erstes Druckbegrenzungsventil oder ein zweites Druckbegrenzungsventil beaufschlagt, wobei für das erste Druckbegrenzungsventil einen höheren Schaltdruck als für das zweite Druckbegrenzungsventil eingestellt ist. Auf diese Weise kann z.B. im Stillstand des Kompressors ein höherer Dichtmediumdruck in der Dichtanordnung eingestellt werden, um ein Ausströmen von Arbeitsmedium des Kompressors durch die Dichtanordnung sicher zu unterbinden.

Ein eventuell vorhandenes Kühlsystem der Dichtanordnung kann auf einfache Weise genutzt werden, wenn in der Zuleitung eine Kühlleitung abzweigt, die mit einem Kühlsystem der Dichtanordnung verbunden wird. Damit kann die Dichtanordnung und indirekt auch die Kolbenstange durch das Dichtmedium zusätzlich gekühlt werden, wobei aber gleichzeitig externe zusätzliche Aggregate zur Umwälzung eines eigenen Kühlmediums eingespart werden können.

Die gegenständliche Erfindung wird nachfolgend unter Bezugnahme auf die beispielhaften, schematischen und nicht einschränkenden Figuren 1 bis 6 näher erläutert. Dabei zeigt
Fig.1 eine erfindungsgemäße Dichtanordnung mit Umwälzung des Dichtmediums,
Fig.2 ein Hydraulikschema der Umwälzung des Dichtmediums,
Fig.3 ein Hydraulikschema mit konstantem Volumenstrom,
Fig.4 ein Hydraulikschema mit auf Temperatur geregeltem Volumenstrom,
Fig.5 ein Hydraulikschema mit auf Druck geregeltem Volumenstrom und
Fig. 6 ein Hydraulikschema für zwei Dichtanordnungen.

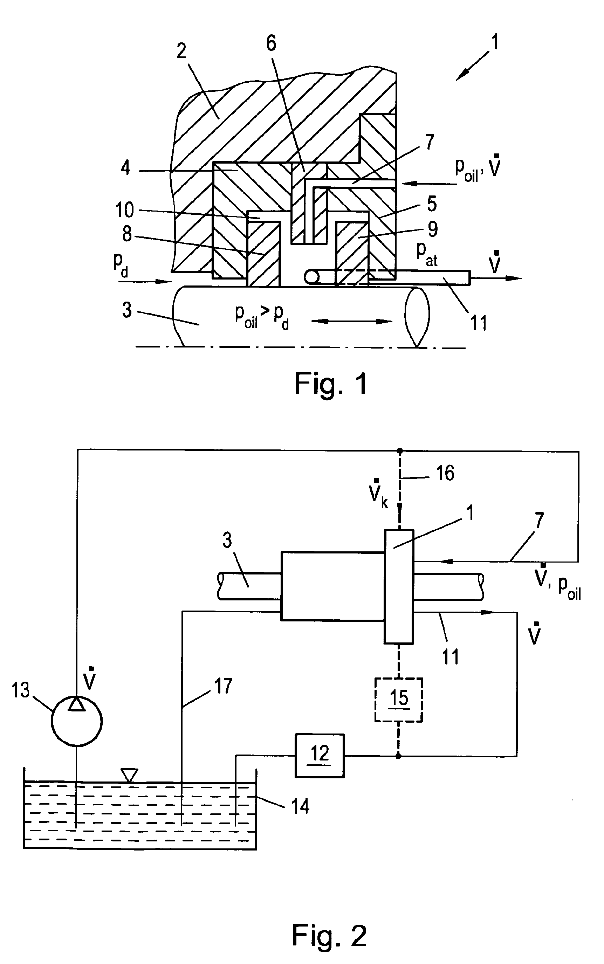

In Fig. 1 ist eine bekannte Dichtanordnung 1 zur Abdichtung einer axial hin- und hergehenden Kolbenstange 3 eines Kolbenkompressors gegenüber einen abzudichtenden Druck p_{d} eines Arbeitsmediums, z.B. der Zylinderdruck, dargestellt. Die Dichtanordnung 1 ist in einem feststehenden Gehäuseteil 2 des Kompressors, wie z.B. dem Kompressorgehäuse, angeordnet und dichtet zwischen diesem Gehäuseteil 2 und der bewegten Kolbenstange 3. Die Dichtanordnung 1 wird z.B. wie hinlänglich bekannt im vormontierten Zustand in das Gehäuseteil 2 eingesetzt und fixiert, z.B. mittels einer Anzahl von über dem Umfang verteilten Schrauben. Die Dichtanordnung 1 umfasst im gezeigten Beispiel zwei L-förmige Kammerscheiben 4, 5, die im dargestellten Ausführungsbeispiel axial durch eine Trennscheibe 6 getrennt sind. Es sind aber natürlich auch andere Ausführungen, z.B. mit T-förmigen Trennscheiben, denkbar. An einer Kammerscheibe 5 kann radial außen auch ein Flansch vorgesehen sein, mittels dem die Dichtanordnung 1 am Gehäuseteil 2 befestigt werden kann. Die Kammerscheiben 4, 5 und gegebenenfalls die Trennscheibe 6 können in bekannter Weise durch einen durchgehenden Bolzen zusammengehalten werden. Durch diese Anordnung entsteht zwischen den L-förmigen Kammerscheiben 4, 5, gegebenenfalls der Trennscheibe 6 und der Kolbenstange 3 eine Ausnehmung 10. In dieser Ausnehmung 10 sind ein erstes und zweites Dichtelement 8, 9 angeordnet, wobei die Dichtelemente 8, 9 durch den wirkenden Druck eines in die Ausnehmung 10 über eine Zuleitung 7 zugeführten Dichtmediums jeweils an den axialen Enden der Ausnehmung 10, also an den radialen Schenkeln der L-förmigen Kammerscheiben 4, 5, anliegen und axial voneinander getrennt angeordnet sind (die Orientierungen "axial" und "radial" sind auf die Orientierung der Kolbenstange 3 bezogen). Das erste und zweite Dichtelement 8, 9 sind radial außen beabstandet von den Kammerscheiben 4, 5, also von den axialen Schenkeln der Kammerscheiben 4, 5, angeordnet und liegen radial innen an der Dichtfläche an der Kolbenstange 3 an. Das Dichtmedium, wie z.B. ein Öl, wird unter einem Druck pₒᵢₗ, der größer ist als der abzudichtende Druck p_{d}, in die Ausnehmung 10 zugeführt. Das Dichtmedium ist somit durch die Dichtelemente 8, 9 in der Ausnehmung 10 eingeschlossen und wirkt radial außen und axial auf die Dichtelemente 8, 9, die somit durch den Druck pₒᵢₗ radial nach innen an die Kolbenstange 3 und axial an die Kammerscheiben 4, 5 gedrückt werden und somit abdichten. Dadurch entsteht eine Dichtmediumbarriere, die eine Leckage des abzudichtenden gasförmigen Arbeitsmediums des Kompressors verhindert.

Als Dichtelemente 8, 9 können entweder bekannte hydraulische Dichtringe, wie z.B. ein Lippendichtring oder ein Kompaktdichtring, mit einer an der Kolbenstange 3 anliegenden Dichtlippe, oder aber auch hinlänglich bekannte starre, geschnittene oder segmentierte Packungsringe oder Packungsring-Kombinationen, wie z.B. eine Kombination aus einem radial und tangential geschnittenen Packungsring, eingesetzt werden. Hydraulische Dichtringe können bekanntermaßen auch so ausgeführt sein, dass Dichtmedium, das bei einem Hub durch die Dichtlippe durchgepresst wird, beim Gegenhub durch die Dichtlippe wieder "zurückgesaugt" wird, sodass in Summe keine oder nur eine geringe Leckage von Dichtmedium durch den hydraulischen Dichtring entsteht. Bei der Verwendung von Packungsringen oder Packungsring-Kombinationen entsteht gewöhnlich eine geringe Leckage von Dichtmedium durch die Abdichtung, die aber in der Regel kein Problem darstellt.

Selbstverständlich könnte die Dichtanordnung 1 auch anders aufgebaut oder aus anderen und/oder zusätzlichen Komponenten bestehen, wie z.B. in der WO 2010/079227 A1 oder der AT 510171 A1 ausführlich beschrieben.

Mit der Ausnehmung 10 ist nun eine Ableitung 11 verbunden, über die Dichtmedium aus der Ausnehmung 10 abgeleitet werden kann. Die Ableitung 11 ist vorzugsweise, aber nicht notwendigerweise, diametral gegenüber der Mündung der Zuleitung 7 in die Ausnehmung 10 angeordnet, um eine gute Durchströmung der Ausnehmung 10 zu erreichen. Selbstverständlich könnten auch mehrere Zuleitungen 7 und/oder Ableitungen 11 vorgesehen sein. Damit kann Dichtmedium durch die Ausnehmung 10 umgewälzt werden, wie anhand der Fig.2 näher erläutert.

Über eine Umwälzeinrichtung, hier z.B. eine Umwälzpumpe 13, wird der Dichtanordnung 1 ein Dichtmediumstrom *V̇* über die Zuleitung 7 zugeführt und über die Ableitung 11 abgeführt. Die Umwälzung des Dichtmediums erfolgt über einen Dichtmediumbehälter 14, aus dem die Umwälzpumpe 13 ansaugt und in die das Dichtmedium wieder rückgeführt wird. Der für die Abdichtung benötigte Druck pₒᵢₗ wird über eine Druckregeleinheit 12 eingestellt.

Durch die Umwälzung von Dichtmedium durch die Dichtanordnung 1 bzw. durch die Ausnehmung 10 wird einerseits sichergestellt, dass die Temperatur des Dichtmediums nicht zu hoch ansteigt. Zusätzlich erfolgt dadurch auch eine direkte Kühlung der Kolbenstange 3, da die Kolbenstange 3 vom Dichtmedium umspült wird. Damit ergibt sich ein erheblicher Zusatznutzen, wenn durch die direkte Kühlung der Kolbenstange 3 auf eine aufwendige Kühlung der Dichtanordnung 1 verzichtet werden kann. Ebenso kann durch die Umwälzung allfällige Verschmutzung aus der Ausnehmung 10 ausgespült werden bzw. können Ablagerungen von prozessbedingtem Abrieb oder Schmutz in der Ausnehmung 10 unterbunden werden.

In einer weiteren Ausführungsvariante könnte die Dichtanordnung 1 zusätzlich auch über einen vom Dichtmediumstrom *V̇* abgezweigten Kühl-Dichtmediumstrom *V̇_{K}*, der über eine Kühlleitung 16 der Dichtanordnung 1 zugeführt wird, gekühlt werden, wie in Fig.2 strichliert dargestellt. Dazu könnte vor oder nach der Dichtanordnung 1 auch eine Einrichtung 15 zum Regeln des Kühl-Dichtmediumstromes *V̇_{K}* vorgesehen sein, wie z.B. eine Druckregeleinrichtung oder Volumenstromregeleinrichtung. Damit könnte ein eventuell vorhandenes Kühlungsystem der Dichtanordnung 1 genutzt werden, die dafür vorgesehenen externen Aggregate zur Umwälzung eines eigenen Kühlmediums aber eingespart werden. Das kann insbesondere bei einer Umrüstung eines bestehenden Kompressors interessant sein.

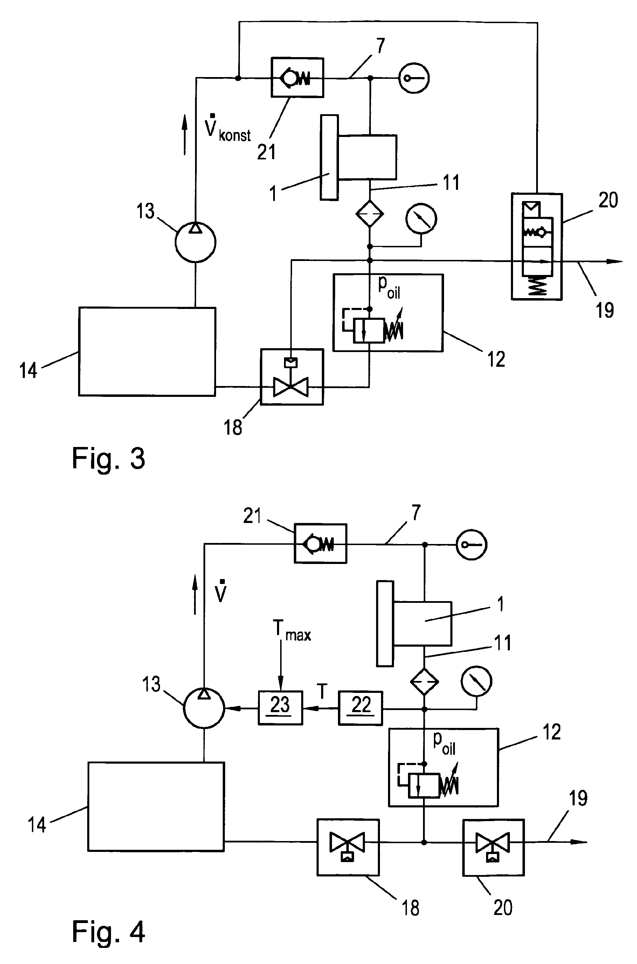

In der Ausgestaltung nach der Fig.3 erfolgt die Umwälzung mit konstantem Dichtmediumstrom *V̇ₖₒₙₛₜ*. Der zur Abdichtung benötigte Druck pₒᵢₗ wird über die Druckregeleinheit 12, hier z.B. einstellbares Druckbegrenzungsventil, eingestellt. Eine solche Dichtanordnung 1 wird z.B. mit einem Druck pₒᵢₗ= 30 - 250bar und einem Dichtmediumstrom *V̇ₖₒₙₛₜ* von 300l/Tag bis 1500 l/Tag betrieben.

Zusätzlich kann in der Rücklaufleitung zum Dichtmediumbehälter 14 noch ein erstes Absperrventil 18, wie z.B. ein entsperrbares Rückschlagventil oder wie hier ein hydraulisch gesteuerter Kugelhahn, vorgesehen sein, um im Störfall die Rückströmung von Gas in den Dichtmediumbehälter 14 zu unterbinden. Dazu wird das Absperrventil 18 über eine Steuerleitung, z.B. wie hier ausgehend von der Ableitung 11, angesteuert. Liegt in der Ableitung 11 kein Druck pₒᵢₗ an, so schließt das Absperrventil 18 selbsttätig. Auf das Absperrventil 18 kann aber auch verzichtet werden, da die Druckregeleinheit 12 diese Funktion ebenfalls übernehmen kann. Die Druckregeleinheit 12 schließt bei sehr geringen Drücken automatisch und verhindert das Einströmen von Gasleckage in den Dichtmediumbehälter 14.

Ebenso könnte in der Ableitung 11 auch eine Entlüftungsleitung 19 vorgesehen sein, in der ein zweites Absperrventil 20, wie z.B. wie hier ein sperrbares Rückschlagventil oder ein hydraulisch gesteuerter Kugelhahn, angeordnet sein kann. Dazu wird das zweite Absperrventil 20 über eine Steuerleitung, z.B. wie hier ausgehend von der Zuleitung 7, angesteuert. Falls in der Zuleitung 7 kein Druck pₒᵢₗ anliegt, öffnet das zweite Absperrventil 20, um das Leckagegas abzuführen. Der Gasentlüftungsdruck ist vorzugsweise kleiner als 4bar. Die Entlüftungsleitung 19 kann z.B. einfach ins Freie geleitet werden, kann aber z.B mit Fackelleitungen verbunden sein, um das Leckagegas abzufackeln.

Weiters kann in der Zuleitung 7 auch ein vorgespanntes Rückschlagventil 21 vorgesehen sein, um unter einem bestimmten Druck pₒᵢₗ die Zuleitung 7 zu schließen. Das vorgespannte Rückschlagventil 21 hat vorzugsweise zwei Funktionen. Erstens verhindert es, dass im Störfall oder im abgeschalteten Zustand Arbeitsmedium des Kompressors in den Dichtmediumbehälter 14 zurückströmt. Zweitens kann es benutzt werden, um beim Einschalten des Hydraulikaggregates einen Druck in der Steuerleitung des Absperrventils 20, die in Strömungsrichtung vor dem Rückschlagventil 21 von der Zuleitung 7 abzweigt, zu erzeugen, welches das Absperrventil 20 betätigt, also schließt, bevor das Dichtmedium zum Absperrventil 20 gelangen kann. Wäre das Absperrventil 20 noch nicht geschlossen würde Dichtmedium über die offene Entlüftungsleitung 19 entweichen. Daher ist vorteilhaft, dass das Rückschlagventil 21 vorgespannt ist. Im Störfall, wenn also kein Druck mehr in der Zuleitung 7 anliegt, öffnet sich das Absperrventil 20 dann wieder automatisch und das Leckagegas kann wieder über die Entlüftungsleitung 19 abgeführt werden, wie bei herkömmlichen Packungen. Als Aktivierungsdruck für das Rückschlagventil 21 kann vorzugsweise ein Druck von ca. 5bar eingestellt werden. Durch die Umwälzung des Dichtmediums wird keine eigene Entlüftung der Dichtmediumleitungen im Normalbetrieb benötigt.

Der Vorteil dieser Ausführung liegt darin, dass die Abdichtung nur über den hydraulischen Druck pₒᵢₗ gesteuert wird, womit eine sehr robuste und einfache Abdichtung realisierbar ist.

Ebenso können natürlich an geeigneten bzw. benötigten Stellen noch andere Komponenten, wie z.B. Manometer, Temperaturanzeigen, Filter, etc., vorgesehen sein, wie in Fig.3 dargestellt.

Die Ausgestaltung der Fig.4 unterscheidet sich von der Fig.2 im Wesentlichen dadurch, dass nun kein konstanter Dichtmediumstrom *V̇ₖₒₙₛₜ* vorgesehen ist, sondern der Dichtmediumstrom *V̇* temperaturgeregelt ist. Dazu ist an der Ableitung 11 ein Temperatursensor 22 vorgesehen, der die aktuelle Temperatur T des Dichtmediums am Austritt aus der Dichtanordnung an eine Regeleinheit 23 liefert, die wiederum die Umwälzpumpe 13 ansteuert, um eine bestimmte voreingestellte Temperatur des Dichtmediums, z.B. Tₘₐₓ=80°C, einzuhalten. Als Absperrventil 20 kommt hier ein hydraulisch gesteuerter Kugelhahn, der z.B. vom Druck vor dem vorgespannten Rückschlagventil 21 angesteuert wird, zum Einsatz und die Entlüftungsleitung 19 ist hier nach der Druckregeleinheit 12 vorgesehen.

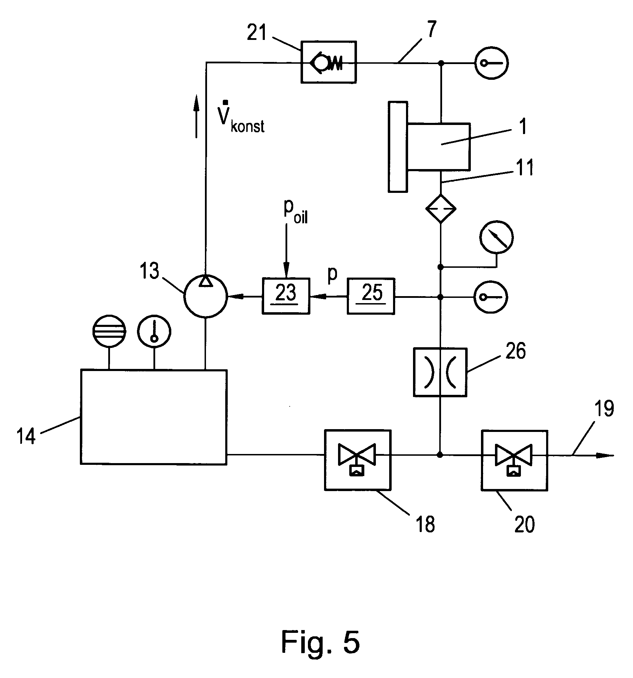

Anstatt einer Temperaturregelung kann auch eine Druckregelung vorgesehen sein, wie in Fig.5 dargestellt. Dazu wird in der Ableitung 11 eine Drosseleinrichtung 26, wie z.B. eine Blende, angeordnet und es wird z.B. in der Ableitung 11 der aktuelle Druck des Dichtmediums von einem Drucksensor 25 gemessen und einer Regeleinheit 23 zugeführt. Die Regeleinheit 23 steuert die Umwälzpumpe 13 so an, dass ein vorgegebener Druck pₒᵢₗ in der Dichtanordnung 1 erreicht wird.

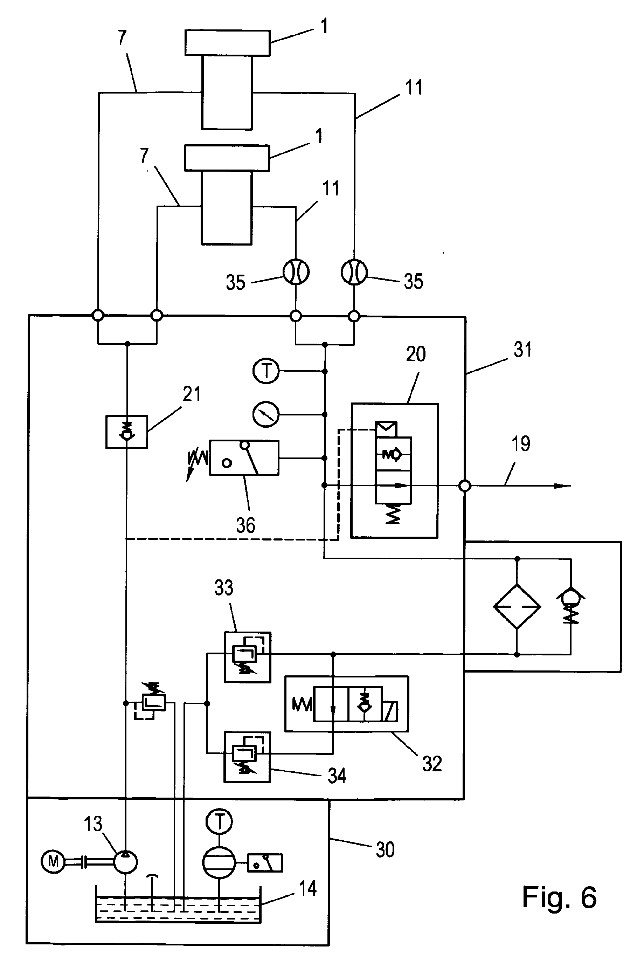

Fig.6 zeigt eine Ausgestaltung, in der mit einer hydraulischen Einheit zwei Dichtanordnungen 1 versorgt werden, wobei natürlich auch mehr als zwei Dichtanordnungen 1 von einer hydraulischen Einheit betrieben werden könnten. Hier ist ein Hydraulikaggregat 30, mit allen für die hydraulische Versorgung notwendigen Komponenten, und ein hydraulischer Steuerblock 31, mit allen für den Betrieb notwendigen hydraulischen Bauteilen, vorgesehen. Das Besondere hierbei ist, dass über ein Umschaltventil 32 zwischen einem Normalbetrieb und einem Stillstandsbetrieb umgeschaltet werden kann. Die Umschaltung kann manuell oder automatisch erfolgen. Über das Umschaltventil 32 wird, je nach Stellung, ein erstes Druckbegrenzungsventil 33 und ein zweites Druckbegrenzungsventil 34 beaufschlagt, wobei das erste Druckbegrenzungsventil 33 einen höheren Schaltdruck, z.B. 250bar, eingestellt hat, als das zweite Druckbegrenzungsventil 34, z.B. 150bar. Somit kann je nach Stellung des Umschaltventils 32 der Druck pₒᵢₗ eingestellt werden. Im Normalbetrieb, also wenn der Kompressor läuft, wird der niedrige Druck pₒᵢₗ eingestellt. Wird der Kompressor abgeschaltet, kann auf Stillstandsbetrieb und damit auf den höheren Druck pₒᵢₗ umgeschaltet werden, um sicher zu verhindern, dass Arbeitsmedium des Kompressors in die Dichtanordnung 1 gepresst wird. Bei Stillstand kann es nämlich in seltenen Fällen, z.B. wenn das Druckventil des Kompressors undicht ist, zu einem Druckanstieg im Kompressorzylinder kommen (bis zum Enddruck des Kompressors). Bei Stillstand des Kompressors kann nun z.B. der Druck des Dichtmediums auf Kompressor Enddruck (oder darüber) eingestellt werden, um zu verhindern, dass das Arbeitsmedium in die Dichtanordnung 1 gepresst wird.

In den Ableitungen 11 sind hier auch noch Durchflussmesseinheiten 35 angeordnet. Anstelle der Durchflussmesseinheiten 35 könnten auch Druckschalter vorgesehen sein. Um ein Rückströmen von Dichtmedium zwischen den Dichtanordnungen zu verhindern, können vor den Durchflussmesseinheiten 35 oder Druckschaltern auch noch Rückschlagventile eingebaut werden. Ebenso kann in der Zuleitung ein Druckschalter 36 vorgesehen sein, um druckabhängige Aktionen auszulösen, z.B., um bei einer Störung den Antriebsmotor der Umwälzpumpe 13 nicht weiter zu bestromen.

Bei einer Dichtanordnung 1 wie oben beschrieben, kommt es zu einer kleinen Leckage von Dichtmedium durch die Dichtelemente 8, 9 bzw. zwischen Dichtelemente 8, 9 und Kolbenstange. Diese Leckage ist vorzugsweise aus der Dichtanordnung abzuführen. Eine Leckagerückführung von Dichtmedium aus der Dichtanordnung 1, wie z.B. in der AT 510171 A1 beschrieben, könnte über eine Leckageleitung 17 aus der Dichtanordnung 1 in den Dichtmediumbehälter 14 rückgeführt werden, wie z.B. in Fig.2 dargestellt. Anstelle einer solchen Leckageleitung 17 könnte die Dichtmediumleckage aber auch in den Kurbelkasten des Kompressors geleitet werden. Im Kurbelkasten kann dann ein Überlauf vorgesehen sein, wobei der Überlauf wiederum in den Dichtmediumbehälter 14 rückgeführt wird.

## Patentansprüche

1. Dichtanordnung zur Abdichtung einer hin- und hergehenden Kolbenstange (3) eines Kolbenkompressors mit einem ersten und zweiten Dichtelement (8, 9), die in einer Ausnehmung (10) der Dichtanordnung (1) axial beabstandet angeordnet sind, wobei in der Dichtanordnung (1) eine mit der Ausnehmung (10) verbundene Zuleitung (7) für ein unter Druck (pₒᵢₗ) stehendes Dichtmedium vorgesehen ist und der Druck (pₒᵢₗ) des Dichtmediums größer als der abzudichtende Druck (p_{d}) ist und die Dichtelemente (8, 9) durch den Druck (pₒᵢₗ) des Dichtmediums jeweils an einem axialen Ende der Ausnehmung (10) und an der Kolbenstange (3) anliegend angeordnet sind, sodass das Dichtmedium durch die Dichtelemente (8, 9) mit dem Druck (pₒᵢₗ) in der Ausnehmung (10) eingeschlossen ist, **dadurch gekennzeichnet, dass** eine Ableitung (11) für Dichtmedium vorgesehen ist, die mit der Ausnehmung (10) verbunden ist und eine Umwälzeinrichtung (13) vorgesehen ist, die das Dichtmedium unter Aufrechterhaltung des Drucks (pₒᵢₗ) des Dichtmediums in der Ausnehmung (10) über die Zu- und Ableitung (7, 11) durch die Ausnehmung (10) umwälzt.

2. Dichtanordnung nach Anspruch 1, **dadurch gekennzeichnet, dass** in der Ableitung (11) eine Druckregeleinheit (12) angeordnet ist.

3. Dichtanordnung nach Anspruch 1 oder 2, **dadurch gekennzeichnet, dass** in der Ableitung (11) ein erstes und/oder ein zweites Absperrventil (18, 20) angeordnet ist.

4. Dichtanordnung nach einem der Ansprüche 1 bis 3, **dadurch gekennzeichnet, dass** in der Zuleitung ein vorgespanntes Rückschlagventil (21) angeordnet ist.

5. Dichtanordnung nach Anspruch 3 und 4, **dadurch gekennzeichnet, dass** das zweite Absperrventil (20) durch den Druck vor dem vorgespannten Rückschlagventil (21) betätigt ist.

6. Dichtanordnung nach einem der Ansprüche 1 bis 5, **dadurch gekennzeichnet, dass** an der Ableitung (11) ein Temperatursensor (22) vorgesehen ist, der mit einer Regelungseinheit (23) zum Regeln der Umwälzeinrichtung (13) verbunden ist.

7. Dichtanordnung nach einem der Ansprüche 1 bis 5, **dadurch gekennzeichnet, dass** an der Ableitung (11) ein Drucksensor (25) vorgesehen ist, der mit einer Regelungseinheit (23) zum Regeln der Umwälzeinrichtung (13) verbunden ist.

8. Dichtanordnung nach einem der Ansprüche 1 bis 7, **dadurch gekennzeichnet, dass** in der Ableitung (11) ein Umschaltventil (32) vorgesehen ist, das ein erstes Druckbegrenzungsventil (33) oder ein zweites Druckbegrenzungsventil (34) beaufschlagt, wobei für das erste Druckbegrenzungsventil (33) ein höherer Schaltdruck als für das zweite Druckbegrenzungsventil (34) eingestellt ist.

9. Dichtanordnung nach einem der Ansprüche 1 bis 8, **dadurch gekennzeichnet, dass** in der Zuleitung (7) eine Kühlleitung (16) abzweigt, die mit einem Kühlsystem der Dichtanordnung (1) verbunden ist.

## Claims

1. A sealing arrangement for sealing a reciprocating piston rod (3) of a piston compressor having a first and a second sealing element (8, 9), which are provided in a recess (10) in the sealing configuration (1), with an axial distance between them, whereas an inlet line (7), which is connected to the recess (10) is provided in the sealing configuration (1) for a sealing medium which is under pressure (pₒᵢₗ), and the pressure (pₒᵢₗ) of the sealing medium is greater than the pressure (p_{d}) to be sealed, and the sealing elements (8, 9) are each arranged abutting an axial end of the recess (10) and the piston rod (3) because of the pressure (pₒᵢₗ) of the sealing medium, so that the sealing medium with the pressure (pₒᵢₗ) is enclosed in the recess (10) by the sealing elements (8, 9), **characterized in that** an outlet line (11) is provided for sealing medium, which is connected to the recess (10), and a circulating device (13) is provided, circulating the sealing medium through the recess (10) via the inlet and outlet lines (7, 11) while maintaining the pressure (pₒᵢₗ) of the sealing medium in the recess (10).

2. The sealing arrangement according to claim 1, **characterized in that** a pressure regulating unit (12) is provided in the outlet line (11).

3. The sealing arrangement according to claim 1 or 2, **characterized in that** a first and/or a second cutoff valve (18, 20) is/are provided in the outlet line (11).

4. The sealing arrangement according to any one of claims 1 to 3, **characterized in that** a prestressed nonreturn valve (21) is provided in the inlet line.

5. The sealing arrangement according to claim 3 and 4, **characterized in that** the second cutoff valve (20) is activated by the pressure upstream from the prestressed nonreturn valve (21).

6. The sealing arrangement according to any one of claims 1 to 5, **characterized in that** a temperature sensor (22) is provided on the outlet line (11) which is connected to a control unit (23) for controlling the circulating device (13).

7. The sealing arrangement according to any one of claims 1 to 5, **characterized in that** a pressure sensor (25) is provided on the outlet line (11) which is connected to a control unit (23) for controlling the circulating device (13).

8. The sealing arrangement according to any one of claims 1 to 7, **characterized in that** a switching valve (32), which acts upon a first pressure limiting valve (33) or a second pressure limiting valve (34), is provided in the outlet line (11), wherein a higher switching pressure is set for the first pressure limiting valve (33) than for the second pressure limiting valve (34).

9. The sealing arrangement according to any one of claims 1 to 8, **characterized in that** a cooling line (16) which is connected to a cooling system of the sealing arrangement (1) branches off from the inlet line (7).

## Revendications

1. Dispositif d'étanchéité destiné à réaliser l'étanchéité d'une tige de piston (3) à mouvement alternatif d'un compresseur à piston, comprenant des premier et second éléments d'étanchéité (8, 9) qui sont disposés dans un évidement (10) du dispositif d'étanchéité (1) en étant espacés axialement l'un de l'autre, le dispositif d'étanchéité (1) comportant un conduit d'alimentation (7) relié à l'évidement (10) et destiné à un fluide d'étanchéité à une pression (pₕᵤᵢₗₑ) et la pression (pₕᵤᵢₗₑ) du fluide d'étanchéité étant supérieure à la pression d'étanchéité (p_{d}) et les éléments d'étanchéité (8, 9) étant disposés de façon à porter chacun contre une extrémité axiale de l'évidement (10) et contre la tige de piston (3) en raison de la pression (pₕᵤᵢₗₑ) du fluide d'étanchéité de sorte que le fluide d'étanchéité est contenu dans l'évidement (10) à la pression (pₕᵤᵢₗₑ) par le biais des éléments d'étanchéité (8, 9), **caractérisé en ce qu'**il est prévu pour le fluide d'étanchéité un conduit d'évacuation (11) qui est relié à l'évidement (10) et **en ce qu'**il est prévu un moyen de circulation (13) qui fait circuler le fluide d'étanchéité à travers l'évidement (10) par le biais des conduits d'alimentation et d'évacuation (7, 11) tout en maintenant la pression (pₕᵤᵢₗₑ) du fluide d'étanchéité dans l'évidement (10).

2. Dispositif d'étanchéité selon la revendication 1, **caractérisé en ce qu'**une unité de commande de pression (12) est disposée dans la conduite d'évacuation (11).

3. Dispositif d'étanchéité selon la revendication 1 ou 2, **caractérisé en ce que** des première et/ou seconde vannes de retenue (18, 20) sont disposées dans le conduit d'évacuation (11).

4. Dispositif d'étanchéité selon l'une des revendications 1 à 3, **caractérisé en ce qu'**une vanne de retenue précontrainte (21) est disposée dans la conduite d'alimentation.

5. Dispositif d'étanchéité selon l'une des revendications 3 et 4, **caractérisé en ce que** la seconde vanne de retenue (20) est actionnée par la pression avant la vanne de retenue de précontrainte (21).

6. Dispositif d'étanchéité selon l'une des revendications 1 à 5, **caractérisé en ce qu'**il est prévu au niveau du conduit d'évacuation (11) un capteur de température (22) qui est relié à une unité de régulation (23) servant à réguler le dispositif de circulation (13).

7. Dispositif d'étanchéité selon l'une des revendications 1 à 5, **caractérisé en ce qu'**il est prévu au niveau du conduit d'évacuation (11) un capteur de pression (25) qui est relié à une unité de régulation (23) servant à réguler le dispositif de circulation (13).

8. Dispositif d'étanchéité selon l'une des revendications 1 à 7, **caractérisé en ce qu'**il est prévu dans le conduit d'évacuation (11) une vanne de commutation (32) qui alimente une première vanne de limitation de pression (33) ou une seconde vanne de limitation de pression (34), une pression de commutation étant réglée pour être plus élevée pour la première vanne de limitation de pression (33) que pour la seconde vanne de limitation de pression (34).

9. Dispositif d'étanchéité selon l'une des revendications 1 à 8, **caractérisé en ce qu'**un conduit de refroidissement (16), qui est relié à un système de refroidissement du dispositif d'étanchéité (1), bifurque dans le conduit d'alimentation (7).
